# EUROPEAN PATENT APPLICATION

(11) **EP 4 740 801 A1**
(43) Date of publication of application: **13.05.2026**
(21) Application number: 25180045.4
(22) Date of filing: 30.05.2025
(51) Int. Cl.: A47J 31/44, A47J 42/40, A47J 31/06, A47J 31/36, A47J 31/42

(54) **ELECTRIC WDT DISTRIBUTION TOOL**

(30) Priority: 11.11.2024 CN 202422739283 U; 19.12.2024 CN 202423145398 U
(71) Applicant: Zhuhai Luckyman Technology Co., Ltd., Zhuhai Guangdong (CN)
(72) Inventor: XIANG, Jun, Zhuhai (CN); ZHANG, Haijiao, Zhuhai (CN); WANG, Yang, Zhuhai (CN)
(74) Representative: Bayramoglu et al.

(57) **Abstract**

An electric WDT distribution tool (WDT) is structurally simple and convenient-to-operate, can realize distribution synchronously during a dosing process, and can be adapted to baskets of different depths. The electric WDT distribution tool (WDT) includes a distributor body (1), where a powder inlet (2) is formed in a middle of the distributor body (1); a distribution module is further provided on the distributor body (1); the distribution module (1) is a vibratory distribution device or a rotary distribution device; the distributor body cooperates with a basket of a coffee maker; and coffee powders fall into the basket through the powder inlet (2), while being distributed by the distribution module.

## Description

### TECHNICAL FIELD

The present disclosure relates to distributors, and more specifically to an electric WDT distribution tool for applying the Weiss Distribution Technique (WDT) to coffee grounds.

### BACKGROUND

Grinding coffee beans is a crucial step in espresso preparation, typically performed with an electric grinder due to its high speed and consistent particle size. However, during dosing, the fast discharge rate and fixed outlet angle often cause coffee grounds to bounce on the portafilter basket, leading to uneven distribution and spillage. After dosing, unevenly piled grounds require manual application of the Weiss Distribution Technique (WDT) to improve puck uniformity; this extra step reduces efficiency. Moreover, conventional (non-electric) WDT tools have fixed-length needles, so different basket depths necessitate multiple tools, increasing cost and storage requirements. It is therefore desirable to provide an electric WDT distribution tool that is simple, self-adjusting to various basket depths, and capable of synchronous vibration and rotation during dosing.

### SUMMARY

In order to overcome shortages of the prior art, a technical problem to be solved by the present disclosure is to provide an electric WDT distribution tool that is structurally simple and convenient-to-operate, can realize distribution synchronously during a dosing process, and can be adapted to baskets of different depths.

A technical solution employed by the present disclosure is as follows: An electric WDT distribution tool includes a distributor body, where a powder inlet is formed in a middle of the distributor body; a distribution module is further provided on the distributor body; the distribution module includes a rotary motor, a rotating ring, and a needle carrier; the rotating ring is in a rotating fit with the powder inlet; the rotary motor is provided at a side of the distributor body and cooperates with an outer edge of the rotating ring; a plurality of vertical guide slots are formed in an inner side of the rotating ring; a plurality of guide pins are provided at an outer side of the needle carrier; the plurality of guide pins respectively cooperate with the plurality of vertical guide slots; and the rotating ring is configured to drive a distribution needle end of the needle carrier to cooperate with an external basket.

Further, the needle carrier includes a supporting shaft and a plurality of supporting arms; a plurality of distribution needles are provided on a lower end surface of each of the supporting arms; one end of the supporting arm is connected to the supporting shaft; the guide pin is provided at the other end of the supporting arm; and the supporting arm cooperates with the vertical guide slot through the guide pin.

Further, the supporting arm is an arcuate rod-like structure; the plurality of supporting arms are uniformly provided at an outer side of the supporting shaft; and along a circumferential direction, the plurality of supporting arms have a same arc direction.

Further, an upper end of the supporting arm is provided with a tapered protrusion; an upper end of the supporting shaft is provided with a conical protrusion; and the tapered protrusion and the conical protrusion cooperate with a material falling within the rotating ring.

Further, the vertical guide slot has a rectangular structure and is formed in an upper end of the inner side of the rotating ring; two sides and a bottom of the guide pin respectively match with two long side edges and a short bottom edge of the vertical guide slot; and the guide pin is in a sliding fit with the vertical guide slot.

Further, a lower end of the distributor body is provided with a mounting plate; an upper end of the mounting plate cooperates with a bottom of the outer edge of the rotating ring, and a lower end of the mounting plate is provided with a basket locating groove; and the basket locating groove matches with an outer edge of an upper end of the external basket in shape.

Further, the basket locating groove is provided with a plurality of magnets; and the plurality of magnets magnetically cooperate with the outer edge of the upper end of the external basket.

Further, a top cover is provided on an upper end surface of the distributor body; a through hole is formed in a middle of the top cover; an inner diameter of the through hole is less than an inner diameter of the rotating ring; and ends of the plurality of supporting arms are in a limiting fit with an edge of the through hole.

Further, a plurality of stabilizing posts are provided at an outer side of the distributor body; mounting through grooves are respectively formed in middles of the stabilizing posts; the rotary motor is provided in one of the mounting through grooves; and a vibration motor is provided in another one of the mounting through grooves.

The above solution has the following beneficial effects: The needle carrier can slide on the grooves through the guide pins to realize self-adaptive height adjustment, and can be self-adaptively adjusted for baskets of different heights, realizing strong adaptability. Two stabilizing posts cooperating with each other are in a limiting fit with a handle end of the portafilter, such that the distributor body is accurately docked with the basket. The basket is attached and positioned through the basket locating groove and the attachment magnet, ensuring no displacement or detachment during dosing and distribution, and realizing rotation distribution in the dosing. The present disclosure realizes the distribution in the dosing, omits the operation of distributing the coffee powders in the basket in the process from the dosing to coffee extraction of the grinder, and improves the efficiency. The present disclosure can realize vibration distribution synchronously in the rotation distribution, can realize distribution of the coffee powders in the dosing, and is structurally simple and convenient-to-operate.

Another technical solution employed by the present disclosure is as follows: The present disclosure includes a distributor body, where a powder inlet is formed in a middle of the distributor body; a distribution module is further provided on the distributor body; the distribution module includes a vibration motor; a distribution module is further provided on the distributor body; the distribution module includes a vibration motor; a basket locating groove is formed in a lower end of the distributor body; the basket locating groove matches with an outer edge of a basket end of an external extracting portafilter in shape; and the powder inlet cooperates with the basket end of the external extracting portafilter.

The above solution has the following beneficial effects: Before dosing of the basket, the distributor body is provided at an upper end of the basket. A junction between the basket of the coffee maker and the portafilter can be buckled by stabilizing posts on the distributor body. Meanwhile, the basket of the coffee maker is attached to the basket locating groove through a plurality of magnets on the distributor body, such that coffee powders are not spilled out from an edge of the basket during the discharging process of the grinder. Actual start time and duration of the vibration can be controlled by the operator, realizing convenience in operation. The basket is vibrated by the vibration motor through the distributor body, such that the coffee powders can be vibrated synchronously in the discharging process, and the coffee powders can be evenly distributed in the basket. Upon completion of the distribution, the distributor can be detached and placed back to the workbench. The present disclosure is structurally simple, convenient-to-operate, and more efficient.

### BRIEF DESCRIPTION OF THE DRAWINGS

FIG. 1 is a stereoscopic view according to an implementation of the present disclosure;
FIG. 2 is a stereoscopic view with a top cover hidden according to an implementation of the present disclosure;
FIG. 3 is a stereoscopic view from another perspective according to an implementation of the present disclosure;
FIG. 4 is a top view according to an implementation of the present disclosure;
FIG. 5 is a stereoscopic view of a distributor body according to an implementation of the present disclosure;
FIG. 6 is a stereoscopic view of a distribution module according to an implementation of the present disclosure;
FIG. 7 is a stereoscopic view of a distribution module in another state according to an implementation of the present disclosure;
FIG. 8 is a stereoscopic view of a needle carrier according to an implementation of the present disclosure;
FIG. 9 is a stereoscopic view of a rotating ring according to an implementation of the present disclosure;
FIG. 10 is a stereoscopic view according to another implementation of the present disclosure;
FIG. 11 is a stereoscopic view with a top cover hidden according to another implementation of the present disclosure; and
FIG. 12 is a stereoscopic view from another perspective according to another implementation of the present disclosure.

### DETAILED DESCRIPTION OF THE EMBODIMENTS

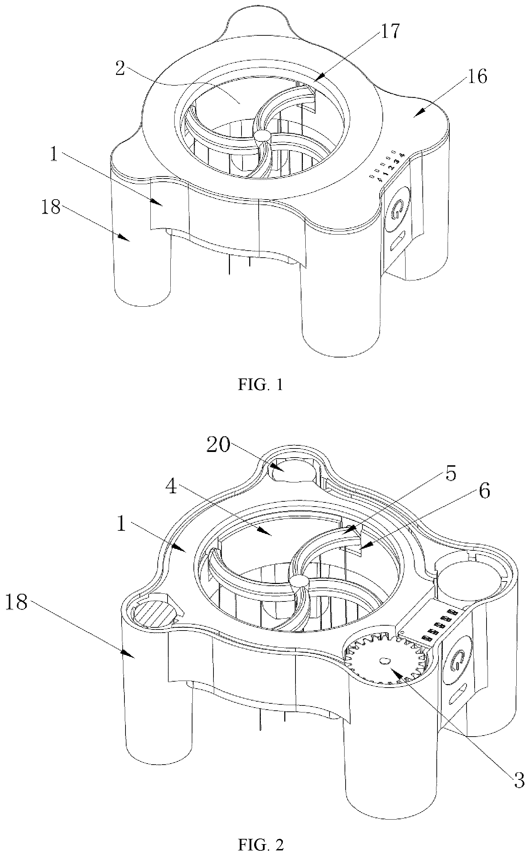

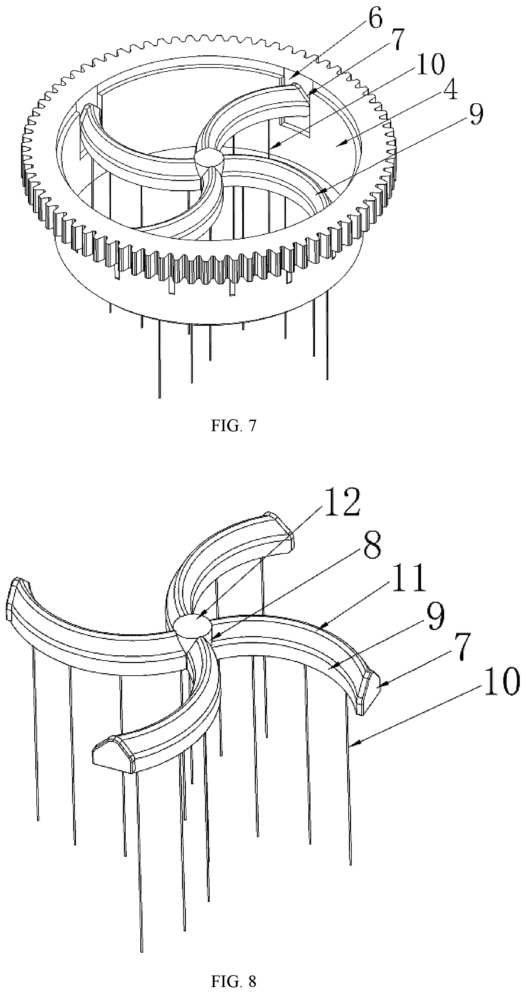

An implementation is as shown in FIG. 1 to FIG. 9. In the embodiment, the present disclosure includes distributor body 1. Powder inlet 2 is formed in a middle of the distributor body 1. A distribution module is further provided on the distributor body 1. The distribution module includes rotary motor 3, rotating ring 4, and needle carrier 5. The rotating ring 4 is in a rotating fit with the powder inlet 2. The rotary motor 3 is provided at a side of the distributor body 1 and cooperates with an outer edge of the rotating ring 4. A plurality of vertical guide slots 6 are formed in an inner side of the rotating ring 4. A plurality of guide pins 7 are provided at an outer side of the needle carrier 5. The plurality of guide pins 7 respectively cooperate with the plurality of vertical guide slots 6. The rotating ring 4 is configured to drive a distribution needle end of the needle carrier 5 to cooperate with an external basket. As can be seen, the guide pin 7 can move along a vertical direction on the vertical guide slot 6. When a bottom of the distributor body 1 is docked with a basket of a coffee maker, a plurality of distribution needles at a bottom of the needle carrier 5 come in contact with a bottom of the basket. Supported by the distribution needles, the needle carrier 5 is suspended at a position adapted to a present depth of the basket of the coffee maker, realizing self-adaptive adjustment with the depth of the basket. The rotating ring 4 in rotation drives the needle carrier 5 to rotate, such that the plurality of distribution needles at a lower end of the needle carrier 5 come in contact with coffee powders in the basket and rotate for distribution.

The rotary motor 3 is in a transmission fit with the rotating ring 4 through a transmission structure. The transmission structure may be a gear set, a synchronous belt structure, etc. In the embodiment, the transmission structure is the gear set. A toothed ring is provided at the outer edge of the rotating ring 4. An output shaft of the rotary motor 3 is provided with an output gear. The output gear is connected to the toothed ring through cooperation of a plurality of secondary gears, realizing power transmission.

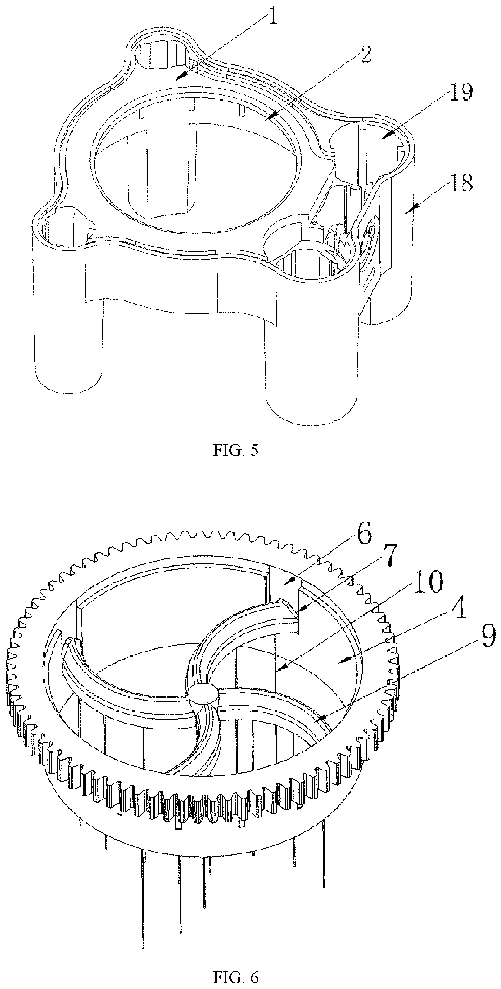

As shown in FIG. 5 to FIG. 9, in the embodiment, the needle carrier 5 includes supporting shaft 8 and a plurality of supporting arms 9. A plurality of distribution needles 10 are provided on a lower end surface of the supporting arm 9. One end of the supporting arm 9 is connected to the supporting shaft 8. The guide pin 7 is provided at the other end of the supporting arm 9. The supporting arm 9 cooperates with the vertical guide slot 6 through the guide pin 7. As can be seen, the plurality of supporting arms 9 serve as a whole support for the needle carrier 5. The plurality of supporting arms 9 are connected through the supporting shaft 8. Through cooperation between the guide pin 7 and the vertical guide slot 6, the rotating ring 4 in rotation can synchronously drives the needle carrier 5 to rotate.

As shown in FIG. 6 to FIG. 8, in the embodiment, the supporting arm 9 is an arcuate rod-like structure. The plurality of supporting arms 9 are uniformly provided at an outer side of the supporting shaft 8. Along a circumferential direction, the plurality of supporting arms 9 have a same arc direction. As can be seen, the arcuate rod-like structure can provide a desirable supporting force, without seriously obstructing the falling coffee powders. With the same arc direction of the supporting arms, the rotating ring 4 and the needle carrier 5 cooperate more stably, enabling more smooth rotation.

As shown in FIG. 6 to FIG. 8, in the embodiment, an upper end of the supporting arm 9 is provided with tapered protrusion 11. An upper end of the supporting shaft 8 is provided with conical protrusion 12. The tapered protrusion 11 and the conical protrusion 12 cooperate with a material falling within the rotating ring 4. As can be seen, with the tapered protrusion 11 and the conical protrusion 12, the coffee powders falling from an outlet of a grinder are not rebounded or piled at the upper end of the supporting arm 9 or the supporting shaft 8, and the coffee powders can fall into the basket better.

As shown in FIG. 6 to FIG. 9, in the embodiment, the vertical guide slot 6 has a rectangular structure and is formed in an upper end of the inner side of the rotating ring 4. Two sides and a bottom of the guide pin 7 respectively match with two long side edges and a short bottom edge of the vertical guide slot 6. The guide pin 7 is in a sliding fit with the vertical guide slot 6. As can be seen, the needle carrier 5 is normally suspended at a middle of the inner side of the rotating ring 4. The bottom of the basket can support the plurality of distribution needles 10, such that the needle carrier 5 can self-adaptively move up to an appropriate position, realizing strong adaptability.

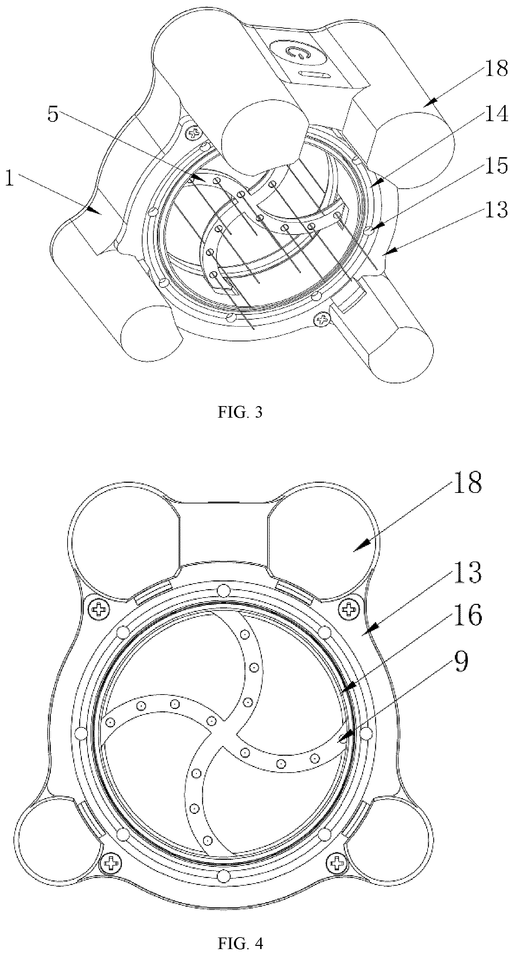

As shown in FIG. 3 and FIG. 5, in the embodiment, a lower end of the distributor body 1 is provided with mounting plate 13. An upper end of the mounting plate 13 cooperates with a bottom of the outer edge of the rotating ring 4, and a lower end of the mounting plate 13 is provided with basket locating groove 14. The basket locating groove 14 matches with an outer edge of an upper end of the basket of the coffee maker in shape. As can be seen, the mounting plate 13 limits the rotating ring 4 in the powder inlet 2, and can be detached conveniently for cleaning or replacement. Meanwhile, with the basket locating groove 14, the distributor body 1 can be accurately docked with the basket of the coffee maker.

As shown in FIG. 3, in the embodiment, the basket locating groove 14 is provided with a plurality of magnets 15. The plurality of magnets 15 magnetically cooperate with the outer edge of the upper end of the basket of the coffee maker. As can be seen, the magnets 15 are magnetically attached to the edge of the upper end of the basket, preventing displacement or detachment of the distributor body 1 for vibration in dosing and distribution.

As shown in FIG. 1 and FIG. 4, in the embodiment, top cover 16 is provided on an upper end surface of the distributor body 1. Through hole 17 is formed in a middle of the top cover 16. An inner diameter of the through hole 17 is less than an inner diameter of the rotating ring 4. Ends of the plurality of supporting arms 9 are in a limiting fit with an edge of the through hole 17. As can be seen, the top cover 16 functions to protect each component, and can facilitate maintenance or component replacement. The inner diameter of the through hole 17 is less than the inner diameter of the rotating ring 4, such that the coffee powders can fall into the basket effectively and accurately, and the coffee powders can be prevented from entering the distributor body 1 through a gap between the top cover 16 and the rotating ring 4 to cause pollution.

As shown in FIG. 2 and FIG. 5, in the embodiment, a plurality of stabilizing posts 18 are provided at an outer side of the distributor body 1. Mounting through groove 19 is formed in a middle of the stabilizing post 18. The rotary motor 3 is provided in one mounting through groove 19. Vibration motor 20 is provided in another mounting through groove 19. As can be seen, the plurality of stabilizing posts 18 are configured to balance a center of gravity of the distributor body 1, and cooperate with a portafilter of the basket for limiting, such that no relative displacement is caused in positioning on the basket. The mounting through groove 19 is configured to accommodate a motor, and can effectively protect each component. In addition, a balancing weight for balancing the center of gravity may further be provided in the mounting through groove 19, ensuring that the electric WDT distribution tool can be provided on the basket more stably in distribution. The vibration motor 20 realizes vibration distribution synchronously in rotation distribution of the distribution needles, such that the coffee powders in the basket is tamped more uniformly.

As shown in FIG. 2 and FIG. 3, in the embodiment, bottoms of the stabilizing posts 18 have a same height. As can be seen, with the same height for the bottoms of the stabilizing posts 18, the electric WDT distribution tool is taken and placed more conveniently, without being provided with the independent storage region. After use, the electric WDT distribution tool can be stably placed on a workbench to prevent the distribution needles from scratching an operator or an external device, realizing stronger adaptability for scenarios.

In the embodiment, a control circuit board and a power supply are further provided in the distributor body 1. The control circuit board is electrically connected to the power supply, and configured to supply power to the rotary motor 3 and the vibration motor 20. The power supply is a rechargeable battery or a power adapter. In the embodiment, the power supply is the rechargeable battery.

In the embodiment, the working principle of the present disclosure is as follows:
Before the dosing of the basket of the coffee maker, the distributor body 1 is provided at the upper end of the basket of the coffee maker and placed vertically. Two stabilizing posts 18 are in a limiting fit with a handle end of the basket of the coffee maker, and guide the distributor body 1 to move down. While magnetically cooperating with the magnets 15, the basket of the coffee maker is positioned on the basket locating groove 14. The distribution needles 10 come in contact with the bottom of the basket of the coffee maker, such that a height of the needle carrier 5 is adjusted self-adaptively according to a depth of the basket.

The basket of the coffee maker is provided at a powder outlet of the electric grinder. After the electric grinder is started, the coffee powders fall into the basket from the middle of the rotating ring 4 through the through hole 17. After the power supply of the distributor is turned on, the vibration motor 20 vibrates, such that the coffee powders in the basket are vibrated and distributed evenly little by little. The rotary motor 3 drives the rotating ring 4 to rotate. Through limiting of the vertical guide slot 6 in the rotating ring 4, the needle carrier 5 rotates synchronously, such that the distribution needles 10 at the lower end of the needle carrier 5 realize rotation distribution on the coffee powders in the basket. Upon completion of the dosing, the power supply of the distributor is turned off, such that the distributor stops to operate. The distributor body 1 is taken down. Therefore, the present disclosure realizes the distribution in the dosing. Meanwhile, the present disclosure can be self-adapted to baskets of different depths, realizing distribution for different amounts of coffee powders for brewing.

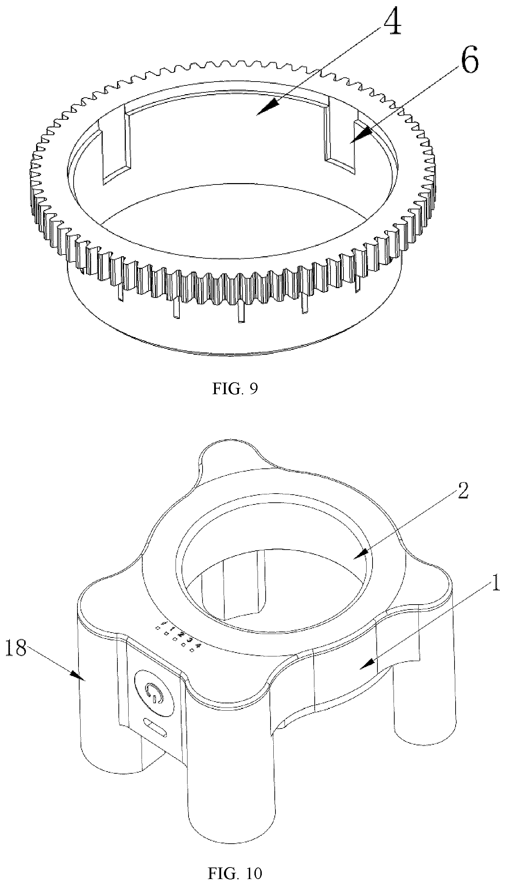

Another implementation is as shown in FIG. 10 to FIG. 12. The present disclosure includes distributor body 1. Powder inlet 2 is formed in a middle of the distributor body 1. A distribution module is further provided on the distributor body 1. The distribution module includes vibration motor 20. Basket locating groove 14 is formed in a lower end of the distributor body 1. The basket locating groove 14 matches with an outer edge of a basket of a coffee maker in shape. The powder inlet 2 cooperates with a basket end of an external portafilter. As can be seen, the distributor body 1 is fixed on the basket of the coffee maker through the basket locating groove 14. A feeding operation is performed on the basket of the coffee maker through the powder inlet 2. During the feeding operation, the vibration motor 20 vibrates synchronously, such that the coffee powders can be evenly distributed in the basket. With simple structure and high distribution efficiency, the present disclosure realizes the distribution in the dosing, and effectively saves grinding and dosing time.

As shown in FIG. 10, in the embodiment, a plurality of stabilizing posts 18 are provided at an outer side of the distributor body 1. A handle of the basket of the coffee maker cooperates with the stabilizing posts 18. The vibration motor 20 is provided in one of the stabilizing posts 18. As can be seen, the handle of the basket of the coffee maker is limited by two stabilizing posts 18, ensuring that the distributor body 1 and the basket of the coffee maker can be limited to each other in dosing to transfer vibration. The other two stabilizing posts 18 take a whole balancing effect, preventing slip or displacement of the distributor body 1 in the dosing for an uneven weight. During the feeding process of the powder inlet 4 on the basket, the vibration motor 20 vibrates the distributor body 1, such that the whole coffee powders in the basket are distributed evenly. The structure is simple and the efficiency is high.

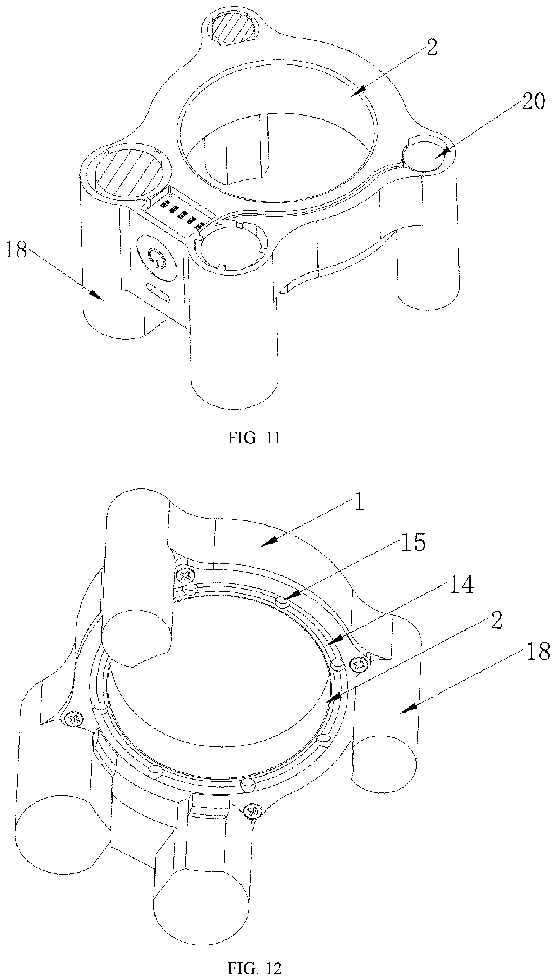

As shown in FIG. 11, in the embodiment, mounting through groove 19 is formed in a middle of the stabilizing post 18. The vibration motor 20 is in a limiting fit with one mounting through groove 19. The mounting through groove 19 on the stabilizing post 18 is provided with a power supply. The power supply is connected and communicated with the vibration motor 20. As can be seen, through the mounting through groove 19, the power supply and the vibration motor 20 can be integrated into the distributor, preventing an external environment from affecting components such as the motor and the power supply, and being safer.

As shown in FIG. 11, in the embodiment, a switch and a charging port are provided at a side of the distributor body 1. As can be seen, during the feeding operation, the switch faces to the operator, such that start and stop of the vibration motor 20 can be controlled at any time, without affecting the feeding operation.

As shown in FIG. 10, in the embodiment, an arc-shaped structure is provided between outer edges of the stabilizing posts 18 of the distributor body 1 close to the grinder. The arc-shaped structure matches with a main body portion at a lower end of a discharge port of the external grinder in shape. As can be seen, the arc-shaped structure can be attached to a surface of a housing of the external grinder, preventing the coffee powders from falling between the distributor body 1 and the housing of the external grinder in the feeding operation.

As shown in FIG. 12, in the embodiment, a plurality of magnets 15 are provided in the basket locating groove 14. The plurality of magnets 15 magnetically cooperate with the outer edge of the basket of the coffee maker. As can be seen, with the magnets 15, the basket can be attached to the basket locating groove 14 stably, preventing displacement or detachment in vibration.

In the embodiment, the working principle of the present disclosure is as follows: In response to the dosing operation, the distributor body 1 is provided on the basket of the coffee maker. A junction between the basket and the handle of the basket is buckled by two stabilizing posts 18. The basket is attached by the magnets 15 and positioned by the basket locating groove 14. The basket is provided under the discharge port of the external grinder. The grinder is started, such that the coffee powders enter the basket through the powder inlet 2. The vibration motor 20 is started through the switch. The basket is vibrated by the vibration motor 20 through the distributor body 1. The coffee powders are vibrated synchronously in the basket and interacted with each other, such that the coffee powders are distributed evenly in the basket. Upon completion of the dosing operation, the distributor is taken down, and placed back for storage. The present disclosure realizes vibration distribution for the basket during the dosing process.

Although the embodiments of the present disclosure are described based on practical solutions, it does not constitute a restriction on the content of the present disclosure. It is obvious that those skilled in the art can modify or combine the implementation solution of the present disclosure with other solutions according to this specification.

## Claims

1. An electric Weiss Distribution Technique (WDT) distribution tool, **characterized by** comprising a distributor body (1), wherein a powder inlet (2) is formed in a middle of the distributor body (1); a distribution module is further provided on the distributor body (1); the distribution module comprises a rotary motor (3), a rotating ring (4), and a needle carrier (5); the rotating ring (4) is in a rotating fit with the powder inlet (2); the rotary motor (3) is provided at a side of the distributor body (1) and cooperates with an outer edge of the rotating ring (4); a plurality of vertical guide slots (6) are formed in an inner side of the rotating ring (4); a plurality of guide pins (7) are provided at an outer side of the needle carrier (5); the plurality of guide pins (7) respectively cooperate with the plurality of vertical guide slots (6); and the rotating ring (4) is configured to drive a distribution needle end of the needle carrier (5) to cooperate with an external basket.

2. The electric WDT distribution tool according to claim 1, **characterized in that** the needle carrier (5) comprises a supporting shaft (8) and a plurality of supporting arms (9); a plurality of distribution needles (10) are provided on a lower end surface of each of the plurality of supporting arms (9); one end of the supporting arm (9) is connected to the supporting shaft (8); the guide pin (7) is provided at the other end of the supporting arm (9); and the supporting arm (9) cooperates with the vertical guide slot (6) through the guide pin (7).

3. The electric WDT distribution tool according to claim 2, **characterized in that** the supporting arm (9) is an arcuate rod-like structure; the plurality of supporting arms (9) are uniformly provided at an outer side of the supporting shaft (8); and along a circumferential direction, the plurality of supporting arms (9) have a same arc direction.

4. The electric WDT distribution tool according to claim 2, **characterized in that** an upper end of the supporting arm (9) is provided with a tapered protrusion (11); an upper end of the supporting shaft (8) is provided with a conical protrusion (12); and the tapered protrusion (11) and the conical protrusion (12) cooperate with a material falling within the rotating ring (4).

5. The electric WDT distribution tool according to claim 1, **characterized in that** the vertical guide slot (6) has a rectangular structure and is formed in an upper end of the inner side of the rotating ring (4); two sides and a bottom of the guide pin (7) respectively match with two long side edges and a short bottom edge of the vertical guide slot (6); and the guide pin (7) is in a sliding fit with the vertical guide slot (6).

6. The electric WDT distribution tool according to claim 1, **characterized in that** a lower end of the distributor body (1) is provided with a mounting plate (13); an upper end of the mounting plate (13) cooperates with a bottom of the outer edge of the rotating ring (4), and a lower end of the mounting plate (13) is provided with a basket locating groove (14); and the basket locating groove (14) matches with an outer edge of an upper end of the external basket in shape.

7. The electric WDT distribution tool according to claim 6, **characterized in that** the basket locating groove (14) is provided with a plurality of magnets (15); and the plurality of magnets (15) magnetically cooperate with the outer edge of the upper end of the external basket.

8. The electric WDT distribution tool according to claim 2, **characterized in that** a top cover (16) is provided on an upper end surface of the distributor body (1); a through hole (17) is formed in a middle of the top cover (16); an inner diameter of the through hole (17) is less than an inner diameter of the rotating ring (4); and ends of the plurality of supporting arms (9) are in a limiting fit with an edge of the through hole (17).

9. The electric WDT distribution tool according to claim 1, **characterized in that** a plurality of stabilizing posts (18) are provided at an outer side of the distributor body (1); mounting through grooves (19) are respectively formed in middles of the stabilizing posts (18); the rotary motor (3) is provided in one of the mounting through grooves (19); and a vibration motor (20) is provided in another one of the mounting through grooves (19).

10. An electric WDT distribution tool, **characterized by** comprising a distributor body (1), wherein a powder inlet (2) is formed in a middle of the distributor body (1); a distribution module is further provided on the distributor body (1); the distribution module comprises a vibration motor (20); a basket locating groove (14) is formed in a lower end of the distributor body (1); the basket locating groove (14) matches with an outer edge of a basket end of an external portafilter in shape; and the powder inlet (2) cooperates with the basket end of the external portafilter.
